# EUROPÄISCHE PATENTANMELDUNG

(11) **EP 4 627 908 A1**
(43) Veröffentlichungstag der Anmeldung: **08.10.2025**
(21) Anmeldenummer: 25153311.3
(22) Anmeldetag: 22.01.2025
(51) Int. Cl.: A01D 89/00, A01F 15/10

(54) **LANDWIRTSCHAFTLICHE ERNTEMASCHINE**

(30) Priorität: 05.04.2024 DE 102024109604
(71) Anmelder: Pöttinger Landtechnik GmbH, 4710 Grieskirchen (AT)
(72) Erfinder: MARBÖCK, Simon, 4710 Grieskirchen (AT)
(74) Vertreter: Thoma, Michael

(57) **Zusammenfassung**

Die vorliegende Erfindung betrifft eine landwirtschaftliche Erntemaschine wie Ballenpresse oder Ladewagen, mit einem Aufsammelförderer umfassend eine Stachelwalze zum Aufsammeln von Erntegut vom Boden und Übergeben an einen Weiterförderer, wobei die Stachelwalze umlaufend antreibbare Förderzinken aufweist, die zwischen Abstreifern angeordnet sind und sich entlang eines Abschnitts ihrer Umlaufbahn zumindest teilweise zwischen die Abstreifer zurückziehen, und wobei an zumindest einem Randabschnitt der Stachelwalze Querleitmittel zum Verjüngen des Erntegutstroms und/oder Zusammenführen des zum Weiterförderer strömenden Ernteguts vorgesehen sind, wobei die Querleitmittel gebogene Ableitfinger umfassen, die von jeweils einem Abstreifer auskragend zum Weiterförderer hin vorspringen und mit ihren freien Enden nach innen zu einem Mittelabschnitt des Weiterförderers hin gebogen sind.

## Beschreibung

Die vorliegende Erfindung betrifft eine landwirtschaftliche Erntemaschine beispielsweise in Form einer Ballenpresse oder eines Ladewagens, mit einem Aufsammelförderer umfassend eine Stachelwalze zum Aufsammeln von Erntegut vom Boden und Übergeben des Ernteguts an einen Weiterförderer, wobei die Stachelwalze umlaufend antreibbare Förderzinken aufweist, die zwischen Abstreifern angeordnet sind und sich entlang eines Abschnitts ihrer Umlaufbahn zumindest teilweise zwischen die Abstreifer zurückziehen, und wobei an zumindest einem Randabschnitt der Stachelwalze Querleitmittel zum Verjüngen des Erntegutstroms und/oder Zusammenführen des zum Weiterförderer strömenden Ernteguts vorgesehen sind.

Bei landwirtschaftlichen Erntemaschinen, die das Erntegut vom Boden mittels einer Pickup aufsammeln, ist das nachgeordnete Arbeitsaggregat, an das das aufgenommene Erntegut übergeben wird, oft schmäler als die Stachelwalze der Pickup bzw. stellen sich an den Rändern des nachgeordneten Arbeitsaggregats bisweilen Übergabeprobleme ein, wenn in den Randbereichen zu viel Erntegut oder Erntegut zu weit außen übergeben wird. Beispielsweise ist die Pickup bei Ballenpressen generell breiter als der nachgeordnete Förderrotor, der das aufgenommene Erntegut in die Ballenformkammer weiterfördert und ggf. in Zusammenarbeit mit einem Schneidwerk zerkleinert, sodass der von der Pickup aufgenommene Erntegutstrom verschmälert werden muss, um in die Ballenkammer zu passen. Eine ähnliche Verschmälerungsaufgabe stellt sich auch bei Ladewagen, die bisweilen eine überbreite Pickup aufweisen, um die Futteraufnahme vom Boden insbesondere beim Kurvenfahren zu verbessern und um zu verhindern, dass aufzunehmendes Erntegut seitlich an der Stachelwalze der Pickup vorbei liegen bleibt.

Eine vergleichbare Problematik bei der Übergabe des Ernteguts von den Randbereichen der Pickup an den nachgeordneten Weiterförderer kann sich aber auch bei Mergern und Häckslern ergeben. Bei Mergern kommt es bisweilen dazu, dass das von einem Rand der Pickup auf einen Endabschnitt des Förderbands des Mergers übergebene Erntegut von letzterem nicht verlässlich mitgenommen wird und es zu einer Staubildung kommen kann, wenn das Förderband sehr schnell umläuft und nicht genug Gripp zum Erntegut entwickelt, um das Erntegut verlässlich mitzunehmen. Bei Häckslern, bei denen das Erntegut von der Pickup an eine Querförderschnecke übergeben wird, kann es zu Verstopfern kommen, wenn von den Randbereichen der Pickup zu viel Erntegut auf den Einlaufbereich der Querförderschnecke übergeben wird.

Insofern wurden bereits verschiedene Lösungen vorgeschlagen, um den Erntegutteppich, der von der Stachelwalze der Pickup an den nachgeordneten Weiterförderer übergeben wird, zu verschmälern bzw. das von den Randbereichen der Pickup übergebene Erntegut schräg abzuleiten und zur Mitte des Weiterförderers hin zusammenzuführen. Beispielsweise ist es bekannt, mit seitlich angeordneten Querförderschnecken die seitlichen Ränder des Erntegutstroms zur Mitte hin querzufördern und hierdurch den Erntegutteppich bzw. -förderstrom zu verschmälern. Solche seitlich rechts und links angeordneten Querförderschnecken sitzen dabei üblicherweise auf einer gemeinsamen, liegenden Antriebswelle und werden rotatorisch angetrieben, sodass die zueinander gegenläufig ausgebildeten Schneckenwendeln der Querförderschnecken bei gleicher Drehrichtung eine Querförderwirkung zur Mitte des Erntegutstroms hin erzielen.

Die Querförderschnecken können dabei dem Förderrotor vorgelagert sein bzw. zwischen der Pickup-Stachelwalze und dem nachgeordneten Förderrotor angeordnet sein, um den breiteren aufgenommenen Erntegutstrom von der Pickup auf dem Weg zum Förderrotor auf dessen Maß zu verschmälern. Solche vorgelagerten Querförderschnecken zeigt beispielsweise die DE 10 2009 017 400 A1, oder auch die Schriften EP 12 52 813 B1, EP 14 17 879 A1 oder EP 15 20 466 A1.

Um den Abstand zwischen Pickup, Stachelwalze und Förderrotor kleinhalten zu können, wurde auch bereits vorgeschlagen, die Querförderschnecken seitlich an den Stirnseiten des Stachelrotors der Pickup vorzusehen, vgl. DE 10 2011 013 243 A1.

Andererseits wurde auch bereits vorgeschlagen, solche Querförderschnecken seitlich an den stirnseitigen Endabschnitten des Förderrotors vorzusehen. Solche Integralrotoren mit seitlichen Schneckenabschnitten sind beispielsweise aus den Schriften EP 37 32 956 A1 oder EP 32 31 272 B1 bekannt.

Ferner wurde auch schon vorgeschlagen, zwischen Pickup und Förderrotor einen sich über die gesamte Breite erstreckenden Zwischenrotor mit gegenläufig angestellten Querförderschaufeln vorzusehen, vgl. EP 29 41 947 B1.

In der EP 02 987 98 A2 wurde zudem auch schon vorgeschlagen, den Erntegutstrom schon vor der Aufnahme durch die Pickup zu verschmälern.

Die genannten Aufnahmevorrichtungen mit zusätzlichen Querförderschnecken benötigen grundsätzlich einen Antrieb, um wirksam zu sein, wodurch sich regelmäßig die Kosten und das Gewicht erhöhen. Gleichzeitig wird zwischen Pickup und Weiterförderer zusätzlicher Bauraum benötigt, der im Zentralbereich die Übergabe des Ernteguts erschwert, da der Abstand zwischen Pickup und Weiterförderer vergrößert wird. Werden die Querförderschnecken zur Umgehung dieser Problematik in den Förderrotor integriert bzw. direkt an der Pickup vorgesehen, ist die Wirksamkeit der Querförderschnecken jedoch begrenzt. Ähnliche Nachteile hinsichtlich benötigtem Bauraum und konstruktivem Aufwand ergeben sich auch bei der genannten Lösung, die den Erntegutstrom schon vor der Pickup verschmälern will.

Um den Bauaufwand der genannten Lösungen zu vermeiden, wurde auch schon vorgeschlagen, in den seitlichen Randbereichen der Pickup keilförmige Ableitbleche vorzusehen, die das von den Förderzinken der Stachelwalze mitgenommene Erntegut zur Mitte hin zusammenführen sollen bzw. zumindest von den Randbereichen der Pickup ein Stück weit nach innen lenken sollen. Solche Leitbleche sind bislang allerdings nur begrenzt wirksam und können den Erntegutteppich nicht stark genug verschmälern, wenn die Pickup deutlich breiter ist als der nachgeordnete Weiterförderer.

Eine weitere Lösung zum Zusammenführen des von der Pickup her kommenden Erntegutteppichs zeigt die Schrift DE 10 2021 106 374 A1, gemäß der ebenfalls an den seitlichen Endabschnitten des nachgeordneten Förderrotors dazu koaxiale Querförderschnecken angeordnet sind, die jedoch nicht mit der Drehzahl des Förderrotors umlaufen, sondern von einem Querförderschneckenantrieb mit abweichender Drehzahl und/oder anderer Drehrichtung angetrieben werden können.

Der vorliegenden Erfindung liegt daher die Aufgabe zugrunde, eine verbesserte landwirtschaftliche Erntemaschine der genannten Art zu schaffen, die Nachteile des Standes der Technik vermeidet und letzteren in vorteilhafter Weise weiterbildet. Insbesondere soll ein verlässliches Zusammenführen des aufgenommenen Erntegutteppichs zur Mitte hin bzw. eine ausreichend starke Verschmälerung des Erntegutteppichs erreicht werden, ohne hierfür aufwendige Zusatzantriebe zu benötigen oder sich durch größere Beabstandungen des Weiterförderers von der Stachelwalze Übergabeprobleme im Mittelabschnitt einzufangen. Gleichzeitig sollen Verstopfungsprobleme in den Randbereichen vermieden werden.

Erfindungsgemäß wir die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, schon im Bereich der Förderzinken der Stachelwalze bzw. beim Abstreifen des Ernteguts von den Förderzinken anzusetzen und mit dem Querfördern bzw. Ableiten des Ernteguts zur Mitte hin zu beginnen. Erfindungsgemäß werden zum Verjüngen des Erntegutstroms und/oder Zusammenführen des zum Weiterförderer strömenden Ernteguts gebogene Ableitfinger vorgesehen, die von jeweils einem Abstreifer auskragend zum Weiterförderer hin vorspringen und mit ihren freien Enden nach innen zu einem Mittelabschnitt des Weiterförderers hin gebogen sind. Die genannten Ableitfinger bilden sozusagen Verlängerungen der Abstreifer und übernehmen das Erntegut unmittelbar beim oder nach dem Abstreifen von den Abstreifern. Durch Ansetzen an den Abstreifern können die Ableitfinger nach Art eines Kamms zwischen den Umlaufbahnen der Förderzinken dem Erntegut eine Querförderwirkung aufprägen. Hierdurch kann nicht nur eine leichte und kompakte Bauweise erreicht werden, sondern durch das frühe Eingreifen der Ableitfinger im Bereich der Abstreifer auch eine verlässliche Querförderwirkung erzielt und trotzdem eine vergrößerte Beabstandung zwischen Stachelwalze und nachfolgendem Weiterförderer vermieden werden, sodass auch im Mittelbereich des Aufsammelförderers keine Übergabeprobleme entstehen. Gleichzeitig können zusätzliche, aufwendige Antriebe, wie sie von Querförderschnecken benötigt werden, eingespart werden.

Um das Erntegut verlässlich auf die Ableitfinger auflaufen zu lassen und dabei eine starke Leitwirkung zu erzielen, können die Ableitfinger in Weiterbildung der Erfindung mit ihrer dem Erntegut zugewandten Seite konvex gekrümmt ausgebildet sein, sodass das Erntegut zunächst sanft von den Abstreifern übernommen und dann mit zunehmendem Eingriffsdruck auf die Ableitfinger aufläuft, sodass deren Führungswirkung zunimmt. Die Ableitfinger wirken nach Art einer Schanze bzw. einer Steilkurve, die das Erntegut in die gewünschte Richtung nach innen ableitet.

Die dem Erntegut zugewandte Seite der Ableitfinger ist dabei die dem bestimmungsgemäßen Förderkanal für das Erntegut zugewandte Seite und kann üblicherweise die Oberseite der Ableitfinger sein.

Um eine harmonische und trotzdem kraftvolle Ableitung des Ernteguts zur Mitte hin ohne Verstopfungsneigung zu erreichen, können die Ableitfinger mehrachsig gekrümmt ausgebildet sein, wobei die Ableitfinger einerseits eine Krümmung um eine Krümmungsachse parallel zur Umlaufachse der Stachelwalze besitzen und andererseits eine Krümmung um eine aufrechte Krümmungsachse besitzen können. Durch die Krümmungskomponente um die liegende Krümmungsachse parallel zur Stachelwalzenumlaufachse erhalten die Ableitfinger einen skisprungartigen Anstieg zu den auskragenden Enden hin, während die Ableitfinger durch die Krümmung um die aufrechte Krümmungsachse zu ihren auskragenden Enden hin nach innen zum Mittelabschnitt des Weiterförderers hin abbiegen.

Um das Erntegut harmonisch umzulenken und gleichmäßig auf die Ableitfinger zu verteilen, können in vorteilhafter Weiterbildung der Erfindung die Ableitfinger mit ihrer dem Erntegut zugewandten Seite auf einer harmonisch gekrümmten Hüllfläche angeordnet sein bzw. eine solche harmonisch gekrümmte Hüllfläche bilden. Insbesondere kann diese virtuelle Hüllfläche auf der Vorderseite der Ableitfinger insgesamt betrachtet ein gebogenes, rinnenförmiges Schaufelblatt bilden, das vom Rand der Stachelwalze von deren Oberseite ausgehend zum Weiterförderer hin vorspringt und sich zum Mittelabschnitt des Weiterförderers hin krümmt. Die Hüllfläche kann sozusagen eine überhöhte Steilwandkurve bilden, die das Erntegut zur Mitte hin umlenkt, so wie dies die Kurve einer Bobbahn mit einem Schlitten tut.

Eine besonders gute Ableitwirkung kann dadurch erreicht werden, dass zwischen benachbarten Ableitfingern jeweils eine Förderzinkenreihe der Förderzinken umläuft und zumindest teilweise an den benachbarten Ableitfingern vorbeistreicht. Hierdurch können die Ableitfinger - bei Betrachtung der Förderrichtung des Ernteguts - relativ weit vorne in den Erntegutstrom eingreifen und sehr früh mit der Ableitwirkung beginnen, was nicht nur dem Zusammenführen des Ernteguts zugutekommt, sondern auch eine kleine Beabstandung zwischen Stachelwalze und Weiterförderer ermöglicht.

Insbesondere kann auch zumindest ein Ableitfinger zwischen zwei Reihen von Förderzinken angeordnet sein, sodass die Förderzinken den Ableitfinger auf beiden Seiten passieren. In Weiterbildung der Erfindung können auch mehrere Ableitfinger vorgesehen sein, die jeweils beidseitig von vorbeistreifenden Förderzinken passiert werden bzw. jeweils zwischen zwei umlaufenden Förderzinken-Reihen positioniert sind.

Durch ihre gebogene Konturierung können die Ableitfinger andererseits aber die Umlaufebenen, in denen die Förderzinken umlaufen, schneiden, wobei die Ableitfinger derart konturiert sind, dass die Förderzinken rechtzeitig abtauchen, um nicht mit den die Umlaufbahnen schneidenden Ableitfingern zu kollidieren. In Weiterbildung der Erfindung kann zumindest ein Ableitfinger vorgesehen sein, der in der genannten Weise eine Umlaufbahn einer Förderzinkenreihe oder auch mehrere Umlaufbahnen mehrerer Reihen von Förderzinken schneiden kann.

Ein Fußabschnitt des Ableitfingers, der auf einem Abstreifer sitzt, kann dabei auf einer Außenseite der geschnittenen Umlaufebene und das auskragende Ende des Ableitfingers auf einer Innenseite der genannten Umlaufebene positioniert sein. Die Außenseite meint dabei die von der Mitte der Stachelwalze abgewandte Seite bzw. die Seite der Umlaufbahn, die dem nächstliegenden, stirnseitigen Ende der Stachelwalze zugewandt ist. Die Innenseite meint hingegen die Seite der Umlaufbahn, die der Mitte der Stachelwalze zugewandt ist.

In Weiterbildung der Erfindung können die im Bereich der Ableitfinger umlaufenden Förderzinken zumindest in dem genannten Fußabschnitt der Ableitfinger und/oder im Bereich eines stromaufseitig angeordneten Abschnitts der Ableitfinger über die Ableitfinger vorspringen bzw. seitlich an den genannten Fußabschnitten bzw. stromaufseitigen Abschnitten der Ableitfinger vorbeistreichen und dabei über die Ableitfinger vorstehen. Andererseits tauchen die Förderzinken in Umlaufrichtung betrachtet vor den auskragenden Abschnitten der Ableitfinger rechtzeitig ab und laufen unter den Ableitfingern hindurch, damit es keine Kollision zwischen Förderzinken und Ableitfingern gibt.

Benachbarte Ableitfinger sind vorteilhafterweise jeweils durch einen Schlitz voneinander beabstandet, der zu den auskragenden Enden der Ableitfinger hin offen ausgebildet sein kann. Mit anderen Worten können die auskragenden Enden der Ableitfinger freie Enden bilden bzw. frei auskragen. Durch eine fehlende Verbindung der Ableitfinger an den stromabseitigen bzw. auskragenden Enden können Verstopfungen des Ernteguts vermieden werden. Insbesondere kann das Erntegut durch die offenen Schlitze bzw. die freien Enden störungsfrei von den Ableitfingern ablaufen.

Um das Lösen des Ernteguts von den Ableitfingern weiter zu unterstützen, können die genannten Schlitze zu den auskragenden Enden der Ableitfinger hin größer werden bzw. kann eine Schlitzbreite zu den freien Enden hin größer werden. Insbesondere kann die Schlitzbreite der Schlitze zwischen den Ableitfingern an den stromaufseitigen Abschnitten der Ableitfinger zunächst konstant bzw. zumindest näherungsweise konstant sein und dann zu den freien Enden bzw. zu den stromabseitigen Abschnitten hin kontinuierlich zunehmen. Insbesondere kann die Schlitzbreite in den Abschnitten der Ableitfinger größer werden, in denen die Ableitfinger nach innen hin gekrümmt sind bzw. einen Verlauf mit einer stärkeren Querkomponente haben. Beispielsweise kann die Schlitzbreite in den letzten 50% oder den letzten 30% der Länge der Ableitfinger zunehmen, wobei die genannte Länge der Ableitfinger den Verlauf der gekrümmten Längsachse der Ableitfinger meint, also den bogenförmigen Verlauf, der virtuell abgelaufen werden könnte, wenn man mittig auf einem Ableitfinger von dessen Fußabschnitt zu dessen freien Ende entlangläuft.

Die breiter werdenden Schlitze zwischen den Ableitfingern können dadurch erreicht werden, dass die Ableitfinger fächerartig aufgespreizt angeordnet sind, wobei die Ableitfinger in diesem Fall eine über ihre Länge gleichbleibende Breite haben könnten. Alternativ können die breiter werdenden Schlitze aber auch dadurch erreicht werden, dass die Ableitfinger eine zu ihren auskragenden Enden hin abnehmende Fingerbreite besitzen.

Beispielsweise können die Ableitfinger in ihren stromaufseitigen Abschnitten eine zunächst zumindest näherungsweise gleichbleibende Fingerbreite besitzen, und zu ihren auskragenden bzw. freien Enden hin eine kontinuierlich kleiner werdende Fingerbreite aufweisen. Beispielsweise können die Ableitfinger an ihren gebogenen Endabschnitten näherungsweise spitz zulaufen, wobei die Spitze selbst abgerundet sein kann.

Vorteilhafterweise kann die Fingerbreite zu den auskragenden Enden der Ableitfinger hin kontinuierlich abnehmen, ggf. unter Ausnahme des Fußabschnitts bzw. eines stromaufseitigen Abschnitts der Ableitfinger, in denen die Ableitfinger eine gleichbleibende Breite aufweisen können, die näherungsweise der Breite der Abstreiferbleche entsprechen kann bzw. ein wenig schmäler sein kann als die genannte Abstreiferbreite.

Beispielsweise kann die Fingerbreite in einem Fußabschnitt der Ableitfinger, mit dem die Ableitfinger an den Abstreifern befestigt sind, im Wesentlichen der Breite der Abstreifer entsprechen, während eine Fingerbreite in den auskragenden Endabschnitten der Ableitfinger kleiner als 75% oder kleiner als 50% und insbesondere etwa 20% - 50% der genannten Fingerbreite im Fußabschnitt sein kann.

Die schmäler werdende Konturierung der Ableitfinger kann ggf. auch unabhängig von den breiter werdenden Schlitzen vorgesehen werden, wenn die Ableitfinger derart gebogen konturiert sind, dass die Spaltbreite im Wesentlichen gleich bleibt. Besonders vorteilhaft kann es jedoch sein, zu den freien Enden hin breiter werdende Schlitze mit zu den freien Enden hin schmäler werdenden Ableitfingern zu kombinieren, um Verstopfer durch an den Ableitfingern hängenbleibendes Erntegut zu vermeiden.

Um hängenbleibendes Erntegut und Verstopfer zu vermeiden, kann es auch vorteilhaft sein, die genannten Ableitfinger elastisch auszubilden, so dass die Ableitfinger mit ihren auskragenden Endabschnitten unter dem bestimmungsgemäßen Druck des Ernteguts wegfedern können, bzw. dann wegfedern können, wenn bei größeren Erntegutansammlungen der Erntegutdruck über das normale Maß hinausgeht.

Durch elastisch wegfedernde Ableitfinger kann nicht nur der Umlenkwinkel für das Erntegut verkleinert und dementsprechend sozusagen der Weg für das Erntegut freigemacht werden, sondern es kann auch ein Löseeffekt dadurch erreicht werden, dass die einzelnen Ableitfinger unterschiedlich weit wegfedern und durch den hierdurch entstehenden Versatz der freien Enden der Ableitfinger ein Abschütteln des Ernteguts erfolgt. Die elastisch nachgiebige bzw. federnde Ausbildung der Ableitfinger, die schon bei bestimmungsgemäßem oder leicht erhöhtem Erntegutdruck Ausweichbewegungen der Ableitfinger ermöglicht, ist insbesondere von Vorteil, wenn die Finger an ihren auskragenden Enden unverbunden sind bzw. die zwischen den Ableitfinger liegenden Schlitze zum freien Ende hin offen sind, um unabhängige Federbewegungen der einzelnen Ableitfinger zu ermöglichen.

Um gerade an den kritischen Rändern eine stärkere Umlenkwirkung bzw. ein stärkeres Zusammenführen des dort geförderten Ernteguts zu erzielen, kann in vorteilhafter Weiterbildung der Erfindung vorgesehen sein, dass die Länge der Ableitfinger unterschiedlich ist und weiter außen, d.h. näher am stirnseitigen Rand der Stachelwalze positionierte Ableitfinger eine größere Länge haben als Ableitfinger, die weiter innen positioniert sind. Insbesondere können die Ableitfinger orgelpfeifenartig eine zunehmend größere Länge besitzen, je weiter sie außen positioniert sind, d.h. der am weitesten innen positionierte Ableitfinger kann die kürzeste Länge besitzen und der ganz außen positionierte Ableitfinger die größte Länge, wobei ein oder mehrere dazwischen positionierte Ableitfinger von innen nach außen stufenweise länger werden können.

Durch die zunehmend größere Länge der weiter außen liegenden Ableitfinger kann deren nach innen gebogener Endabschnitt sich weiter nach innen erstrecken und damit das ganz außen eingefangene Erntegut stärker zur Mitte hin umlenken.

Um eine verstärkte Leitwirkung zu erzielen, können die Ableitfinger an ihren Rändern mit zum Erntegut hin vorspringenden Randstegen versehen sein, wobei sich ein solcher Randsteg im Wesentlichen entlang der gesamten Länge eines Ableitfingers erstrecken kann. Zusätzlich zur verstärkten Leitwirkung kann hierdurch auch die Reibfläche minimiert werden, so dass das Fördergut die Leitfinger leichter überwinden kann. Unabhängig hiervon kann an nur einer Randseite eines Ableitfingers ein solcher Randsteg vorgesehen sein, während der gegenüberliegende Rand des Ableitfingers glatt ausgebildet sein kann, um zu vermeiden, dass sich das Erntegut zwischen den Randstegen fängt, insbesondere wenn die Ableitfinger zu ihren freien Enden hin schmäler werden, da in diesem Fall die Randstege sozusagen eine schmäler werdende Nut definieren würden. Je nachdem, wie stark sich die Ableitfinger zu den freien Enden hin verjüngen bzw. insbesondere dann, wenn die Verjüngung der Ableitfinger zu den Enden hin eher schwach ausgebildet ist oder gar ganz fehlt, können Randstege auch an beiden Rändern eines Ableitfingers vorgesehen sein.

Um einerseits auch im Bereich der Ableitfinger eine ausreichend starke Förderwirkung der Stachelwalze zu haben, andererseits aber für die Übergabe des Ernteguts auf die Abstreifer kein Verheddern des Ernteguts an den Förderzinken zu haben, kann es in Weiterbildung der Erfindung vorteilhaft sein, wenn die Förderzinken des Stachelrotors, die im Bereich der Ableitfinger umlaufen, anders ausgebildet sind als Förderzinken, die in einem ableitfingerfreien Mittelabschnitt des Aufsammelförderers umlaufen. Insbesondere können die Förderzinken, die rechts und/oder links unmittelbar an einem Ableitfinger vorbeistreichen, hinsichtlich Zinkenform und/oder Zinkenlänge und/oder Zinkendicke und/oder Steuerung des Abtauchens anders ausgebildet werden als weiter zur Mitte hin bzw. in der Mitte des Aufsammelförderers angeordnete Förderzinken der Stachelwalze.

Hinsichtlich der Zinkenform kann vorgesehen sein, dass die im Bereich der Ableitfinger umlaufenden Förderzinken eine Abkröpfung entgegen ihrer bestimmungsgemä-ßen Umlaufrichtung besitzen bzw. in Umlaufrichtung betrachtet mit ihren auskragenden Enden nach hinten gebogen sind bzw. weniger steil zur Umlaufrichtung angestellt sind, während im Mittelabschnitt des Aufsammelförderers umlaufende Förderzinken einen im Wesentlichen geraden Zinkenverlauf besitzen können und/oder steiler angestellte, auskragende Zinkenenden besitzen können, die nicht oder weniger stark nach hinten gebogen sind. Beispielsweise können die im Mittelabschnitt umlaufenden Förderzinken im Wesentlichen radial angestellt sein, zumindest in einem in Fahrtrichtung betrachtet vorne und oben liegenden Sektor der Stachelwalze.

Die Stachelwalze kann grundsätzlich ungesteuert umlaufende Förderzinken aufweisen, das heißt Förderzinken, die auf einer Trommel befestigt sind und entlang ihres gesamten Umlaufwegs den gleichen Abstand von der Rotationsachse und den gleichen Anstellwinkel haben, wobei auch bei solchen ungesteuerten Stachelwalzen nichtsdestotrotz durch Zurückfedern der Förderzinken die Anstellwinkel Veränderungen erfahren können.

Alternativ hierzu kann aber auch eine gesteuerte Pickup Verwendung finden, bei der die Förderzinken entlang ihres Umlaufwegs hinsichtlich ihres Abstands von der Rotationsachse und/oder hinsichtlich ihres Anstellwinkels verstellt werden, beispielsweise über eine Nocken- bzw. Kulissenführungssteuerung. Eine solche gesteuerte Pickup ermöglicht es beispielsweise, die Förderzinken im aktiven Sektor der Stachelwalze, in welchem das Erntegut aufgenommen und über Kopf der Pickup an die nachfolgenden Aggregate übergeben wird, weiter über die Abstreifer vorspringend ausgefahren und relativ steil, beispielsweise radial angestellt werden, um eine hohe Förderwirkung zu haben. Der genannte aktive Sektor der Pickup ist üblicherweise, auf die Fahrtrichtung bezogen, nach vorne unten bzw. nach vorne oben orientiert angeordnet, wobei die Förderzinken in diesem Bereich entsprechend ausgerichtetsein können, d.h. nach vorne unten bzw. dann auf ihrem weiteren Umlaufweg nach vorne oben bzw. nach oben. Erreichen die Förderzinken dann auf ihrem Umlaufweg den Übergabebereich zum Weiterförderer hin, können die gesteuerten Förderzinken eingefahren und/oder in ihrem Anstellwinkel verändert werden, um das Erntegut leichter von der Stachelwalze zu lösen bzw. die Förderzinken aus dem Erntegutstrom zu entfernen.

Ist eine solche gesteuerte Pickup vorgesehen, können die Förderzinken, die im Bereich der Ableitfinger umlaufen, anders gesteuert sein als die weiter innen zur Mitte hin laufenden Förderzinken. Beispielsweise können die an den Ableitfingern umlaufenden Förderzinken früher eingefahren werden bzw. zwischen die Abstreifer eintauchen als die weiter in der Mitte laufenden Förderzinken. Alternativ oder zusätzlich können die an den Ableitfingern umlaufenden Förderzinken bei Anfahren der Ableitfinger auch entgegen der Umlaufrichtung der Stachelwalze zurückgekippt bzw. -geschwenkt werden, um durch den weiteren Umlaufweg eingezogen zu werden, ohne an den Ableitfingern anzufahren.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Teilansicht einer Erntemaschine in Form einer Ballenpresse gemäß einer Ausführung der Erfindung, die die Pickup und den nachgeordneten Förderrotor des Schneidwerks, sowie die an den Randbereichen der Pickup angeordneten Ableitfinger zeigt,
- Fig. 2:: eine Frontansicht der Erntemaschine aus Fig. 1, die die schmälere Breite des Förderrotors im Vergleich zur größeren Breite der Pickup und die seitlich angeordneten Ableitfinger zeigt,
- Fig. 3:: eine perspektivische Ansicht der Stachelwalze der Pickup der Erntemaschine aus den vorhergehenden Figuren, die die seitlich angeordneten Ableitfinger zeigt,
- Fig. 4:: eine Frontansicht der Stachelwalze aus Fig. 3, die die randseitig rechts und links angeordneten Ableitfinger zeigt,
- Fig. 5:: eine ausschnittsweise, perspektivische Darstellung eines Randbereichs der Pickup der Erntemaschine aus den vorhergehenden Figuren, die die Anordnung der Ableitfinger verdeutlicht,
- Fig. 6 - 9:: die am seitlichen Rand der Pickup angeordneten Ableitfinger der Erntemaschine aus den vorhergehenden Figuren aus verschiedenen Perspektiven,
- Fig. 10 - 15:: die Anordnung der Ableitfinger auf einer Pickupseite in Einzeldarstellungen ohne die Pickup aus verschiedenen Blickrichtungen,
- Fig. 16 - 17:: eine Anordnung von Ableitfingern an einer Seite der Pickup in Einzeldarstellungen ähnlich den Figuren 10 bis 15 aus verschiedenen Blickrichtungen, wobei die Ableitfinger dieser weiteren Ausführungsform mit vorspringenden Randstegen versehen sind und insgesamt vier Ableitfinger vorgesehen sind,
- Fig. 18:: eine perspektivische Teilansicht einer Erntemaschine, die gemäß einer weiteren Ausführungsform der Erfindung als Merger ausgebildet ist, wobei nachgeordnet zur Stachelwalze der Pickup ein Querförderband als Weiterförderer vorgesehen ist und wobei die Pickup randseitig wieder mit Ableitfingern ausgestattet ist,
- Fig. 19:: eine Seitenansicht des Mergers aus Fig. 18, die die Anordnung der Ableitfinger an der Pickup relativ zum nachgeordneten Querförderband zeigt,
- Fig. 20:: eine perspektivische Teilansicht einer Erntemaschine, die nach einer weiteren Ausbildung der Erfindung als Häcksler ausgebildet ist, wobei nachgeordnet zur Stachelwalze der Pickup eine Querförderschnecke als Weiterförderer vorgesehen ist und wobei die Pickup wiederum randseitig mit Ableitfingern ausgestattet ist, und
- Fig. 21:: eine Seitenansicht des Häckslers aus Fig. 20, die die Anordnung der Ableitfinger an der Pickup relativ zur nachgeordneten Querförderschnecke zeigt.

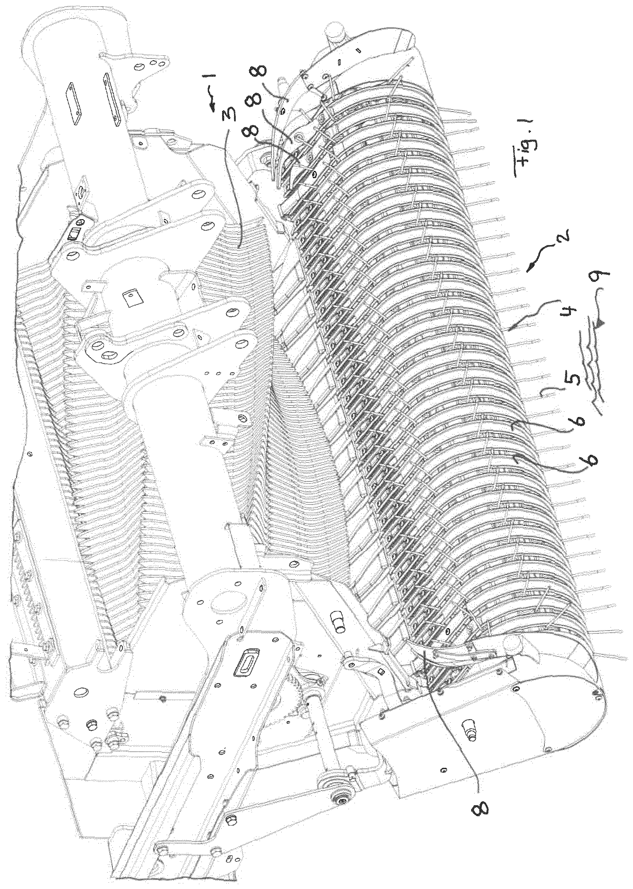

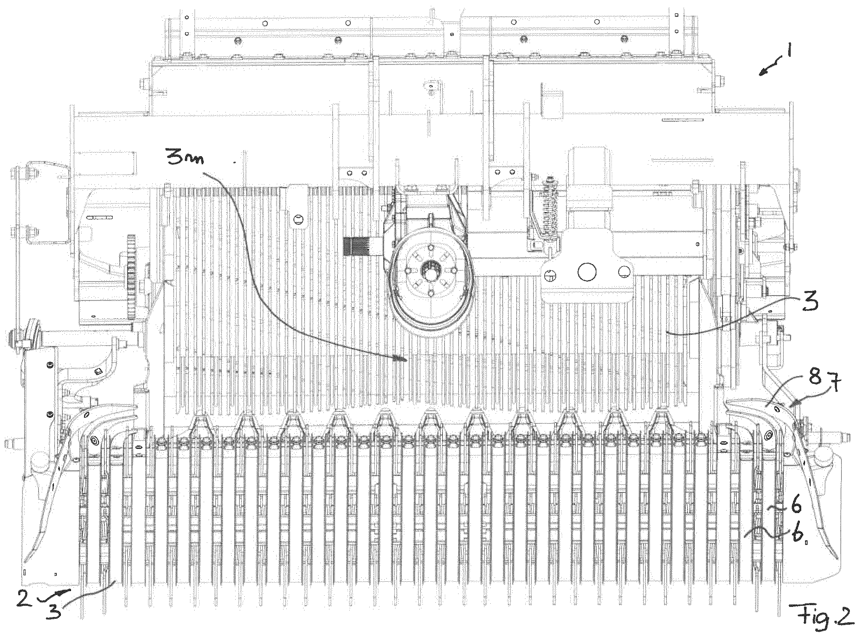

Wie die Figuren 1 und 2 zeigen, umfasst die Erntemaschine 1 einen Aufsammelförderer 2 zum Aufsammeln von Erntegut vom Boden, wobei der genannte Aufsammelförderer 2 eine Pickup mit einer Stachelwalze 4 umfasst, die sich liegend quer zur Fahrtrichtung erstreckt und zum Aufsammeln des Ernteguts nahe über den Boden geführt wird, beispielsweise mittels nicht näher dargestellter Tasträder oder auch einer sensorisch gesteuerten Höhenführung. Die Stachelwalze 4 kann in an sich bekannter Weise höhenverstellbar bzw. höhengeführt sein, und kann ggf. auch pendelnd aufgehängt sein, insbesondere um eine näherungsweise fahrtrichtungsparallele, liegende Achse, um Anpassbewegungen an Bodenwellen ausführen zu können.

Die Stachelwalze 4 umfasst dabei eine Vielzahl von Förderzinken 5, die in mehreren Reihen über die Breite der Pickup verteilt angeordnet sind und um eine liegende, sich quer zur Fahrtrichtung erstreckende Stachelwalzenachse 13 umlaufend angetrieben werden. Als Stachelwalzenantrieb kann ein mechanischer Antriebsstrang dienen, der von einem nicht gezeigten Schlepper her angetrieben werden kann, an den die Erntemaschine 1 als Anbaugerät angebaut werden kann. Alternativ können auch andere Antriebe wie Elektromotoren oder Hydraulikmotoren Verwendung finden.

Zwischen den Förderzinkenreihen sind Abstreifer 6 angeordnet, die voneinander durch einen Schlitz beabstandet sind, sodass die Förderzinken 5 über die Abstreifer 6 vorspringen können, zumindest in einem nach vorne unten bzw. nach vorne oben gerichteten Sektor der Stachelwalze 4, in welchem das Erntegut vom Boden aufgenommen und über Kopf zu einem nachgeordneten Weiterförderer 3 hingefördert wird, an den das Erntegut übergeben wird. Die genannten Abstreifer 6 führen von einer Oberseite der Stachelwalze 4 zu dem besagten Weiterförderer 3, wobei die Förderzinken 5 im Übergabebereich zwischen Stachelwalze 4 und Weiterförderer 3 zwischen den Abstreifern 6 abtauchen, um das Erntegut abzustreifen, wie dies an sich per se bekannt ist.

Der nachgeordnete Weiterförderer 3 kann ein Förderrotor sein, der um eine liegende Rotorachse quer zur Fahrtrichtung rotatorisch angetrieben werden kann, wobei hier als Rotorantrieb ebenfalls ein mechanischer Antriebsstrang von einem Schlepper her oder auch separate Antriebsmotoren dienen können.

Der genannte Weiterförderer 3 in Form eines Förderrotors kann mit den Messern eines Schneidwerks zusammenarbeiten, um das weitergeförderte Erntegut zu zerschneiden, wobei hierzu der Förderrotor, vgl. Figur 1 und Figur 2, mehrere Förderzinken aufweisen kann, die über die Breite des Förderrotors spiralförmig versetzt zueinander angeordnet sein können, wobei die Messer des Schneidwerks zwischen die Zinken eintauchen können, sodass die Zinken das Erntegut über die Messer ziehen.

Je nach Ausbildung der Erntemaschine 1 kann der genannte Weiterförderer 3 das Erntegut in eine Ballenformkammer fördern, wenn die Erntemaschine 1 als Ballenpresse ausgebildet ist, oder in einen Speicherraum fördern, wenn die Erntemaschine als Ladewagen ausgebildet ist.

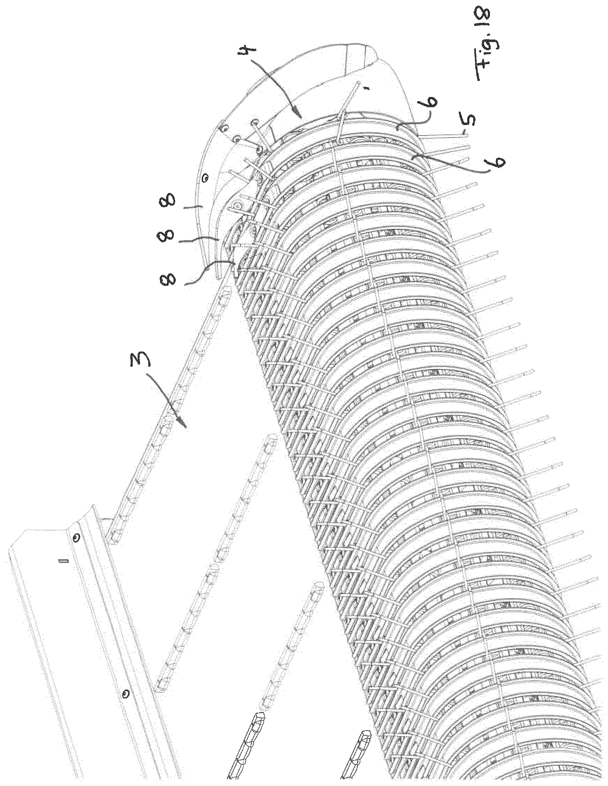

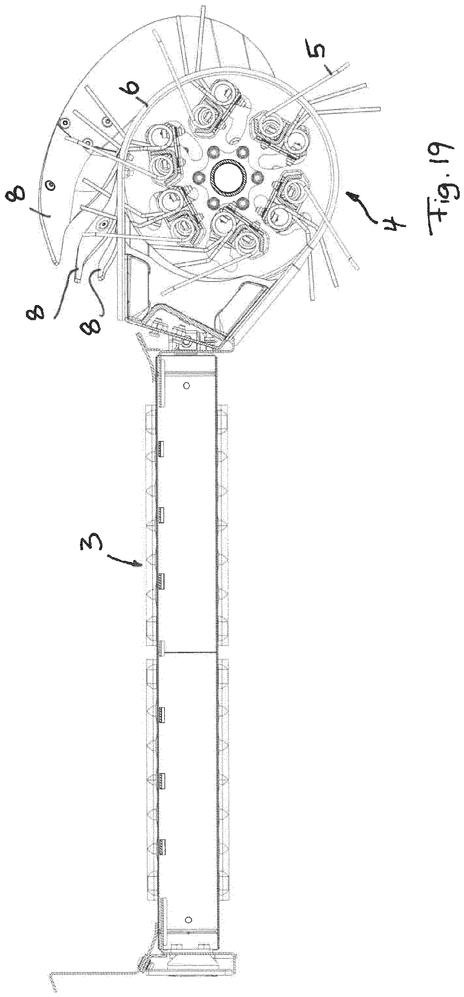

Wie die Figuren 18 und 19 zeigen, kann die Erntemaschine 1 aber auch als Merger bzw. Heuwerbungsmaschine zum Schwaden ausgebildet sein, wobei als Weiterförderer 3 ein Querförderband bzw. ein Querförderer mit endlos umlaufenden Fördermitteln vorgesehen sein kann, vgl. Figur 18 und 19.

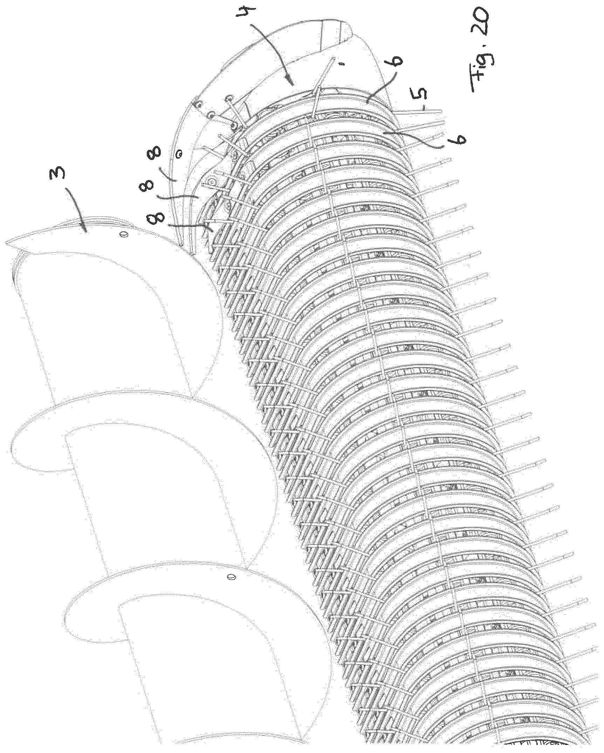

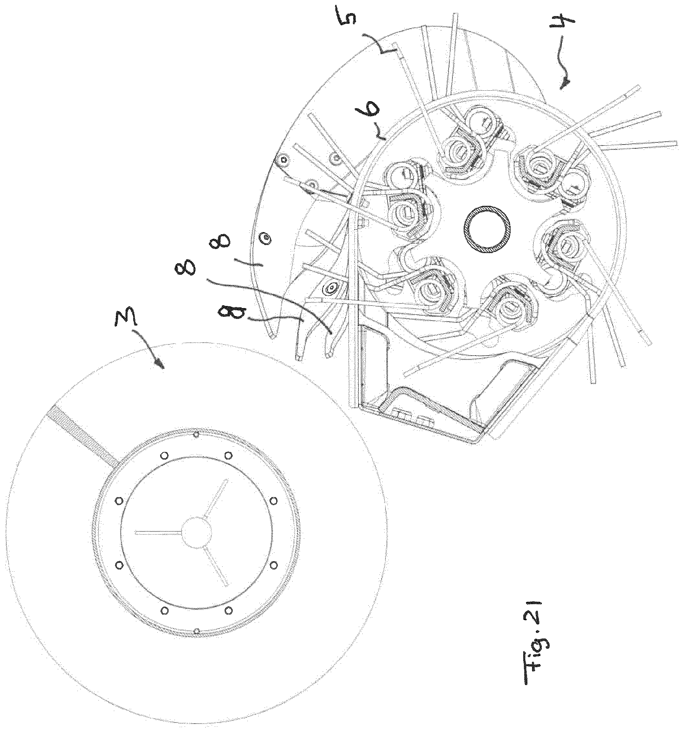

Die Erntemaschine 1 kann aber auch als Häcksler ausgebildet sein, wobei in diesem Fall als Weiterförderer 3 eine Querförderschnecke vorgesehen und der Pickup nachgeordnet sein kann, vgl. Figur 20 und Figur 21. Die genannte Querförderschnecke, die den Weiterförderer 3 bildet, kann um eine liegende, quer zur Fahrtrichtung ausgerichtete Schneckenachse rotierend angetrieben werden.

Im Falle des Mergers gemäß den Figuren 18 und 19 übergibt die Stachelwalze 4 das Erntegut auf das Querförderband und im Falle des Häckslers gemäß den Figuren 20 und 21 an die Querförderschnecke des Häckslers. Die Stachelwalze 4 einschließlich der ihr zugeordneten Ableitfinger 8 kann ungeachtet der konkreten Ausbildung der Erntemaschine als Ballenpresse, Ladewagen, Merger oder Häcksler im Wesentlichen gleich beschaffen sein.

Wie die Figuren 1 und 2 zeigen, kann insbesondere bei einer Ballenpresse und einem Ladewagen der nachgeordnete Weiterförderer 3 eine kleinere Arbeitsbreite besitzen als die vorauslaufende Stachelwalze 4, sodass das ganz in den Randbereichen der Stachelwalze 4 aufgenommene Erntegut nicht ohne weiteres an den nachgeordneten Weiterförderer 3 übergeben werden kann, sondern zur Mitte hin zusammengeführt werden muss. Der von der Stachelwalze 4 an den Weiterförderer 3 übergebene Erntegutteppich bzw. -strom wird verschmälert bzw. verjüngt, und zwar durch Querleitmittel 7, die das Erntegut randseitig zusammenführen und zur Mitte hin umlenken.

Wie die Figuren zeigen, umfassen die genannten Querleitmittel 7 zwei Gruppen von Ableitfinger 8, die einerseits am rechten Rand und andererseits am linken Rand der Pickup bzw. der Stachelwalze 4 angeordnet sind und das dort aufgenommene Erntegut jeweils zur Mitte hin umlenken.

Die genannten Ableitfinger 8 sind dabei an den äußersten Abstreifern 6 befestigt und verlängern diese in Strömungsrichtung des Ernteguts zum Weiterförderer 3 hin, wobei die genannten Ableitfinger 8 gebogen sind, und zwar einerseits gegenüber den Abstreifern 6 nach oben und andererseits nach innen zur Mitte 3m des Weiterförderers 3 hin.

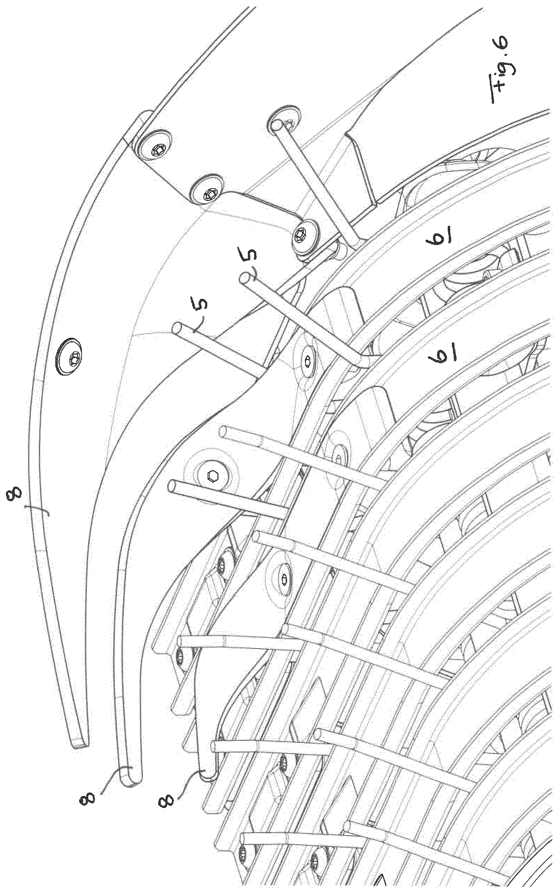

Vorzugsweise können die Ableitfinger 8 in Weiterbildung der Erfindung mit ihrer dem Erntegut zugewandten Seite konvex gekrümmt ausgebildet sein, sodass das Erntegut 9 zunächst sanft von den Abstreifern 6 übernommen und dann mit zunehmendem Eingriffsdruck auf die Ableitfinger 8 aufläuft, sodass deren Führungswirkung zunimmt. Die Ableitfinger 8 wirken nach Art einer Schanze bzw. einer Steilkurve, die das Erntegut in die gewünschte Richtung nach innen ableitet, vgl. bspw. Fig. 6.

Insbesondere können die Ableitfinger 8 mehrachsig gekrümmt ausgebildet sein, wobei die Ableitfinger 8 einerseits eine Krümmung um eine Krümmungsachse parallel zur Umlaufachse der Stachelwalze 4 besitzen und andererseits eine Krümmung um eine aufrechte Krümmungsachse besitzen können. Durch die Krümmungskomponente um die liegende Krümmungsachse parallel zur Stachelwalzenumlaufachse erhalten die Ableitfinger 8 einen skisprungartigen Anstieg zu den auskragenden Enden 10 hin, während die Ableitfinger 8 durch die Krümmung um die aufrechte Krümmungsachse zu ihren auskragenden Enden 10 hin nach innen zum Mittelabschnitt 3m des Weiterförderers 3 hin abbiegen, vgl. Figuren 6 bis 9.

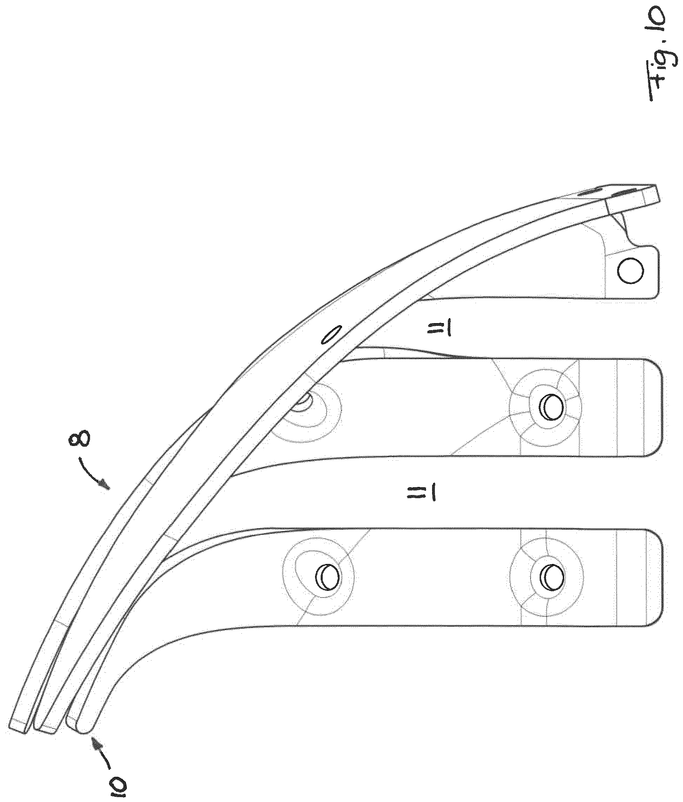

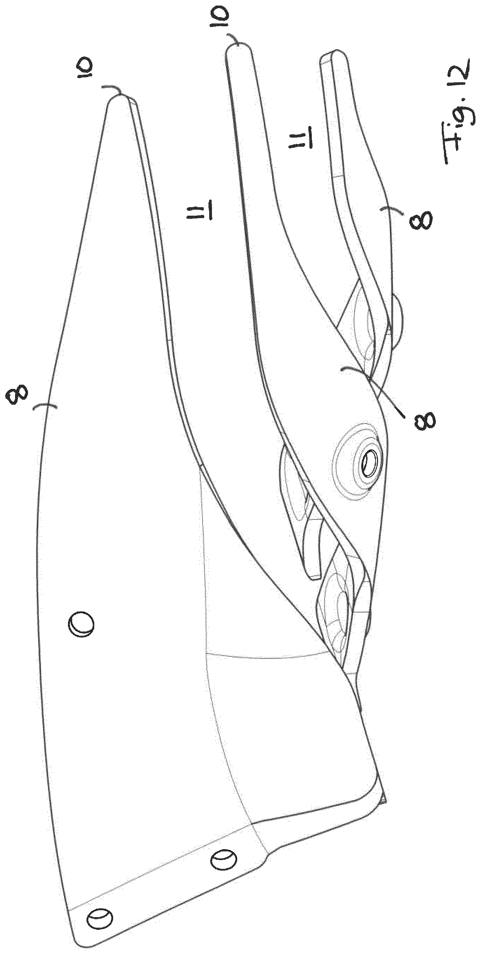

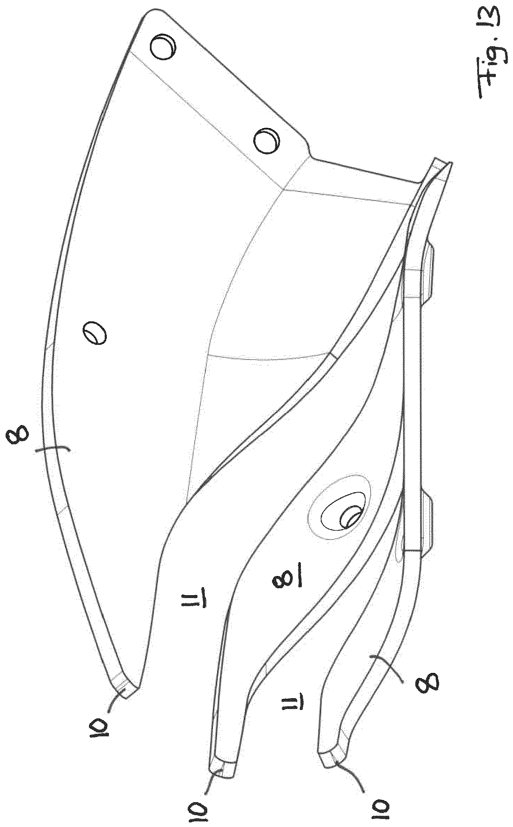

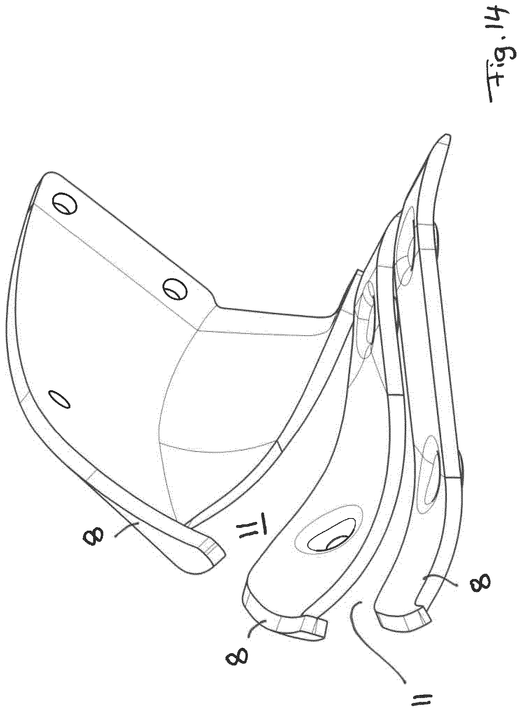

Um das Erntegut harmonisch umzulenken und gleichmäßig auf die Ableitfinger 8 zu verteilen, können in vorteilhafter Weiterbildung der Erfindung die Ableitfinger 8 mit ihrer dem Erntegut zugewandten Seite auf einer harmonisch gekrümmten Hüllfläche angeordnet sein bzw. eine solche harmonisch gekrümmte Hüllfläche bilden. Insbesondere kann diese virtuelle Hüllfläche auf der Vorderseite der Ableitfinger 8 insgesamt betrachtet ein gebogenes, rinnenförmiges Schaufelblatt bilden, das vom Rand der Stachelwalze von deren Oberseite ausgehend zum Weiterförderer hin vorspringt und sich zum Mittelabschnitt 3m des Weiterförderers 3 hin krümmt, vgl Figuren. 10 bis 15. Die Hüllfläche kann sozusagen eine überhöhte Steilwandkurve bilden, die das Erntegut zur Mitte hin umlenkt, so wie dies die Kurve einer Bobbahn mit einem Schlitten tut.

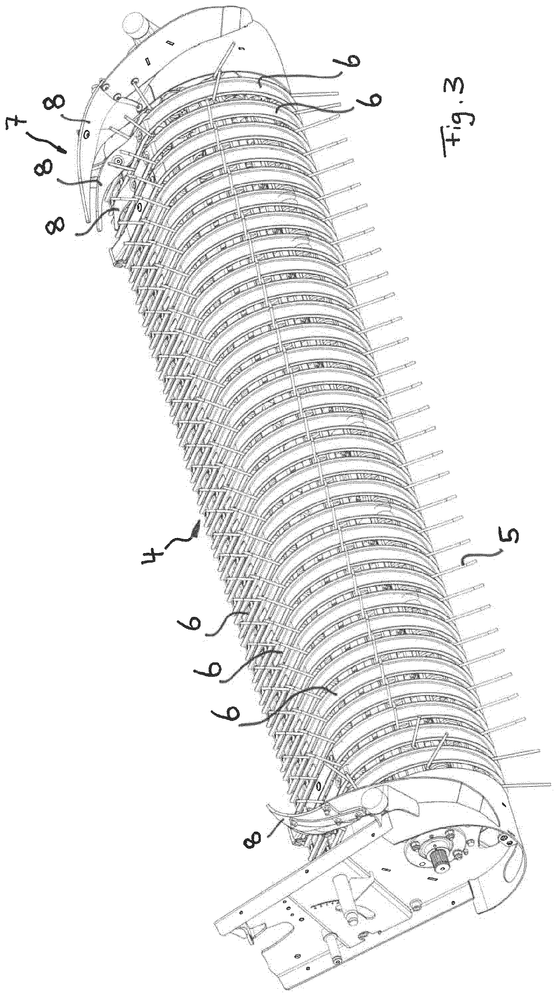

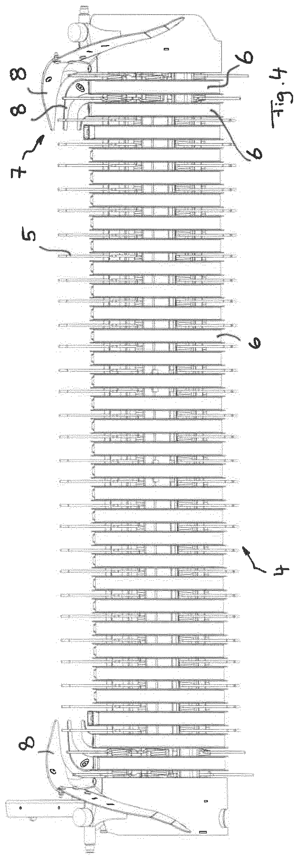

Eine besonders gute Ableitwirkung kann dadurch erreicht werden, dass zwischen benachbarten Ableitfingern 8 jeweils eine Förderzinkenreihe der Förderzinken 5 umläuft und zumindest teilweise an den benachbarten Ableitfingern 8 vorbeistreicht, vgl. Fig. 3 bis 5.

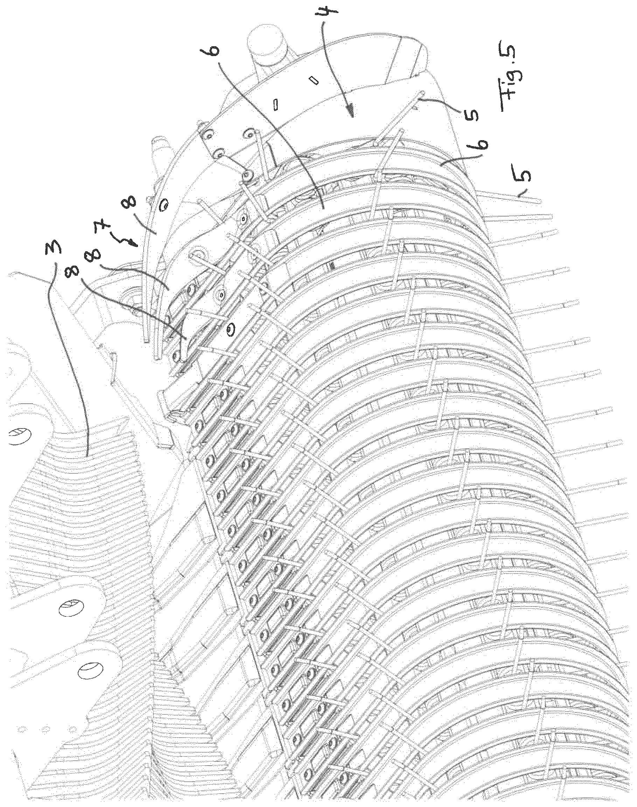

Hierdurch können die Ableitfinger 8 - bei Betrachtung der Förderrichtung des Ernteguts - relativ weit vorne in den Erntegutstrom eingreifen und sehr früh mit der Ableitwirkung beginnen, vgl. Fig. 5, 6 und 8.

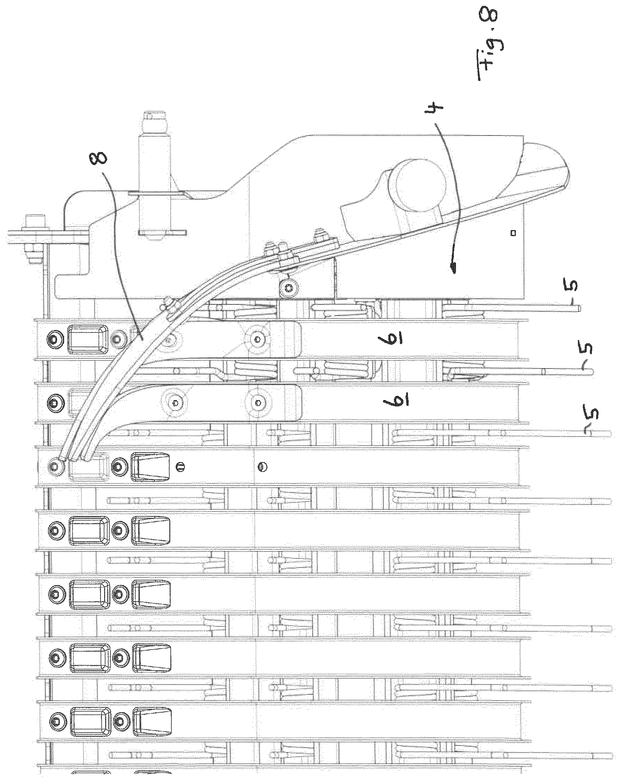

Insbesondere kann auch zumindest ein Ableitfinger 8 zwischen zwei Reihen von Förderzinken 5 angeordnet sein, sodass die Förderzinken 5 den Ableitfinger 8 auf beiden Seiten passieren. In Weiterbildung der Erfindung können auch mehrere Ableitfinger 8 vorgesehen sein, die jeweils beidseitig von vorbeistreifenden Förderzinken 8 passiert werden bzw. jeweils zwischen zwei umlaufenden Förderzinken-Reihen positioniert sind, vgl. Fig. 6 und Fig. 8.

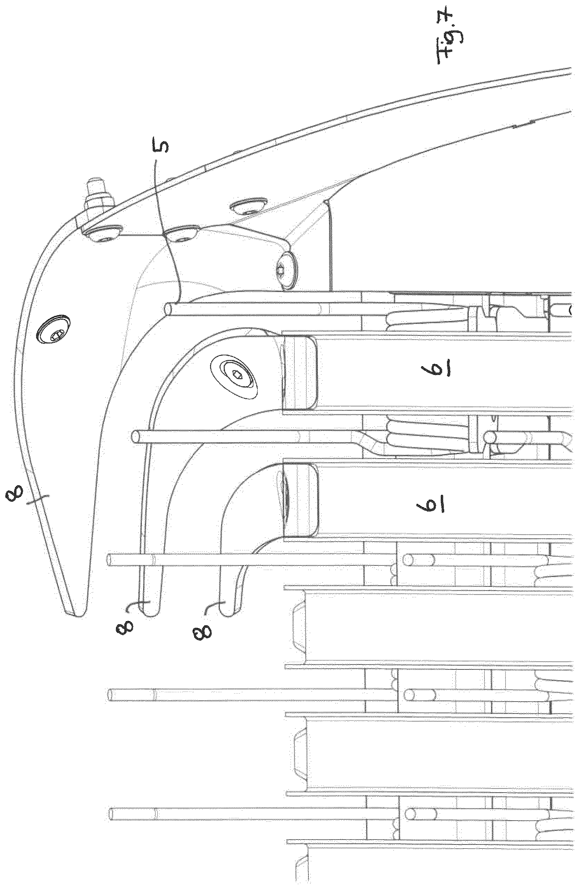

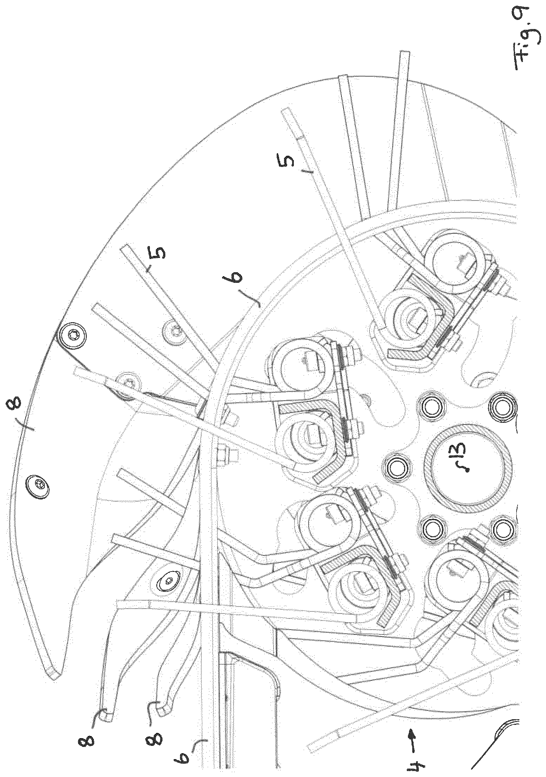

Durch ihre gebogene Konturierung können die Ableitfinger 8 andererseits aber die Umlaufebenen, in denen die Förderzinken 5 umlaufen, schneiden, vgl. Fig. 7, wobei die Ableitfinger 8 derart konturiert sind, dass die Förderzinken 5 rechtzeitig abtauchen, um nicht mit den die Umlaufbahnen schneidenden Ableitfingern 8 zu kollidieren, vgl. Fig. 6 und 9.

Ein Fußabschnitt des Ableitfingers 8, der auf einem Abstreifer 6 sitzt, kann dabei auf einer Außenseite der geschnittenen Umlaufebene und das auskragende Ende 10 des Ableitfingers 8 auf einer Innenseite der genannten Umlaufebene positioniert sein, vgl. Figur 7.

In Weiterbildung der Erfindung können die im Bereich der Ableitfinger 8 umlaufenden Förderzinken 5 zumindest in dem genannten Fußabschnitt der Ableitfinger 8 und/oder im Bereich eines stromaufseitig angeordneten Abschnitts der Ableitfinger 8 über die Ableitfinger 8 vorspringen bzw. seitlich an den genannten Fußabschnitten bzw. stromaufseitigen Abschnitten der Ableitfinger 8 vorbeistreichen und dabei über die Ableitfinger 8 vorstehen, vgl. Figur 5. Andererseits tauchen die Förderzinken 5 in Umlaufrichtung betrachtet vor den auskragenden Abschnitten der Ableitfinger 8 rechtzeitig ab und laufen unter den Ableitfingern 8 hindurch, damit es keine Kollision zwischen Förderzinken 5 und Ableitfingern 8 gibt.

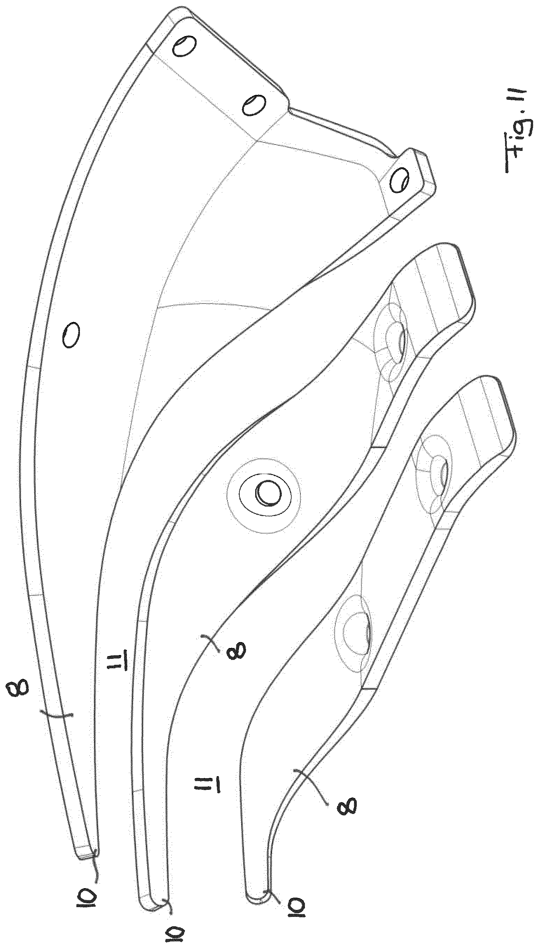

Benachbarte Ableitfinger 11 sind vorteilhafterweise jeweils durch einen Schlitz 11 voneinander beabstandet, der zu den auskragenden Enden der Ableitfinger 8 hin offen ausgebildet ist, vgl. Fig. 11. Durch eine fehlende Verbindung der Ableitfinger 8 an den stromabseitigen bzw. auskragenden Enden 10 können Verstopfungen des Ernteguts vermieden werden. Insbesondere kann das Erntegut durch die offenen Schlitze bzw. die freien Enden störungsfrei von den Ableitfingern 8 ablaufen.

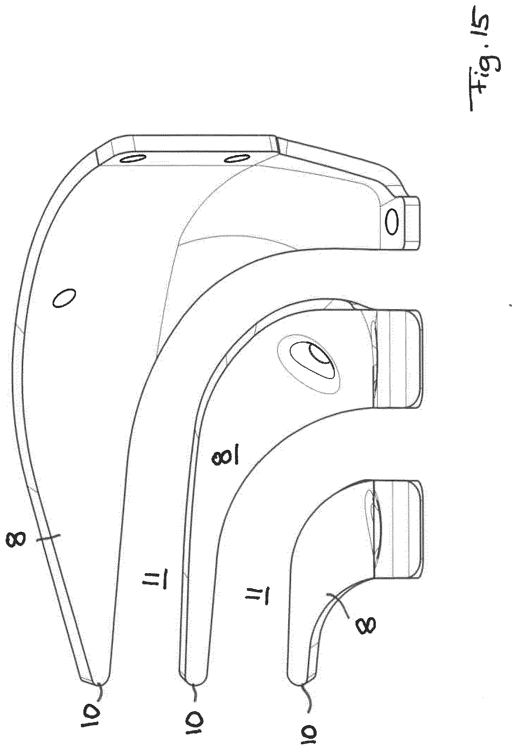

Um das Lösen des Ernteguts von den Ableitfingern 8 weiter zu unterstützen, können die genannten Schlitze 11 zu den auskragenden Enden der Ableitfinger 8 hin größer werden bzw. kann eine Schlitzbreite zu den freien Enden hin größer werden. Insbesondere kann die Schlitzbreite der Schlitze 11 zwischen den Ableitfingern an den stromaufseitigen Abschnitten der Ableitfinger 8 zunächst konstant bzw. zumindest näherungsweise konstant sein und dann zu den freien Enden 10 bzw. zu den stromabseitigen Abschnitten hin kontinuierlich zunehmen, vgl. Fig. 11 und 15. Insbesondere kann die Schlitzbreite in den Abschnitten der Ableitfinger 8 größer werden, in denen die Ableitfinger 8 nach innen hin gekrümmt sind bzw. einen Verlauf mit einer stärkeren Querkomponente haben, vgl. Fig. 11.

Vorteilhafterweise können sozusagen umgekehrt zur Schlitzbreite die Ableitfinger 8 eine zu ihren auskragenden Enden hin abnehmende Fingerbreite besitzen, vgl. Figuren 10 bis 17.

Beispielsweise können die Ableitfinger 8 in ihren stromaufseitigen Abschnitten eine zunächst zumindest näherungsweise gleichbleibende Fingerbreite besitzen, und zu ihren auskragenden bzw. freien Enden 10 hin eine kontinuierlich kleiner werdende Fingerbreite aufweisen. Beispielsweise können die Ableitfinger 8 an ihren gebogenen Endabschnitten 10 näherungsweise spitz zulaufen, wobei die Spitze selbst abgerundet sein kann.

Vorteilhafterweise kann die Fingerbreite zu den auskragenden Enden der Ableitfinger 8 hin kontinuierlich abnehmen, ggf. unter Ausnahme des Fußabschnitts bzw. eines stromaufseitigen Abschnitts der Ableitfinger 8, in denen die Ableitfinger eine gleichbleibende Breite aufweisen können, die näherungsweise der Breite der Abstreiferbleche 6 entsprechen kann bzw. ein wenig schmäler sein kann als die genannte Abstreiferbreite, vgl. Fig. 8.

Um hängenbleibendes Erntegut und Verstopfer zu vermeiden, kann es auch vorteilhaft sein, die genannten Ableitfinger 8 elastisch auszubilden, so dass die Ableitfinger 8 mit ihren auskragenden Endabschnitten 10 unter dem bestimmungsgemäßen Druck des Ernteguts wegfedern können, bzw. dann wegfedern können, wenn bei größeren Erntegutansammlungen der Erntegutdruck über das normale Maß hinausgeht.

Um gerade an den kritischen Rändern der Stachelwalze 4 eine stärkere Umlenkwirkung bzw. ein stärkeres Zusammenführen des dort geförderten Ernteguts zu erzielen, kann in vorteilhafter Weiterbildung der Erfindung vorgesehen sein, dass die Länge der Ableitfinger 8 unterschiedlich ist und weiter außen, d.h. näher am stirnseitigen Rand der Stachelwalze 4 positionierte Ableitfinger 8 eine größere Länge haben als Ableitfinger 8, die weiter innen positioniert sind, vgl. Fig. 7 und 8.

Insbesondere können die Ableitfinger 8 orgelpfeifenartig eine zunehmend größere Länge besitzen, je weiter sie außen positioniert sind, d.h. der am weitesten innen positionierte Ableitfinger 8 kann die kürzeste Länge besitzen und der ganz außen positionierte Ableitfinger 8 die größte Länge, wobei ein oder mehrere dazwischen positionierte Ableitfinger von innen nach außen stufenweise länger werden können, vgl. Figuren 10 bis 17.

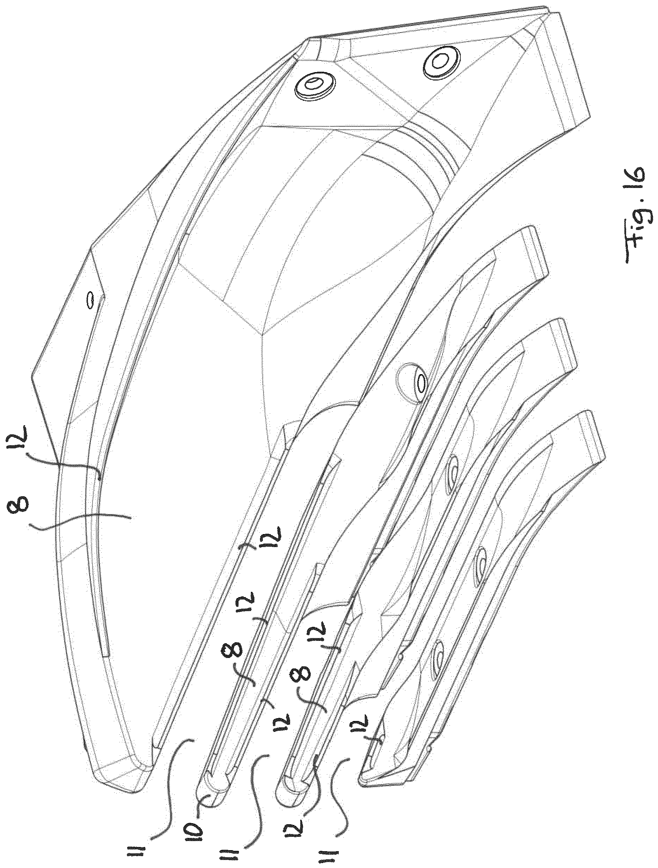

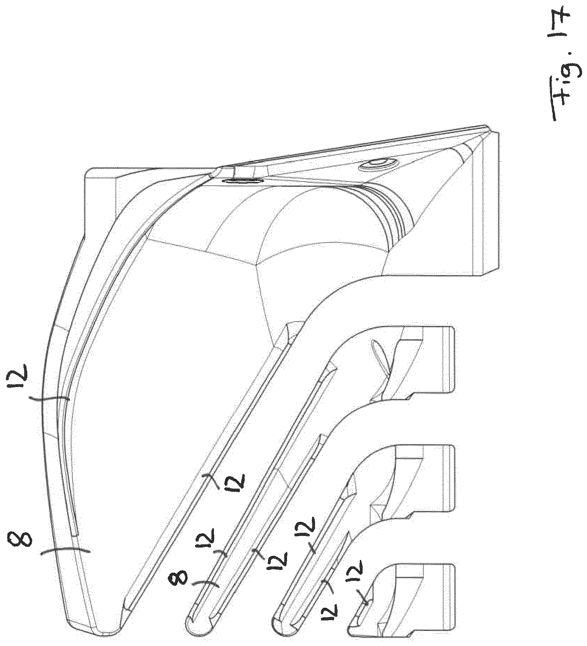

Um eine verstärkte Leitwirkung zu erzielen, können die Ableitfinger 8 an ihren Rändern mit zum Erntegut hin vorspringenden Randstegen 12 versehen sein, wobei sich ein solcher Randsteg 12 im Wesentlichen entlang der gesamten Länge eines Ableitfingers 8 erstrecken kann, oder auch nur im stromabseitigen Bereich der Ableitfinger, wo diese ihre Biegung nach innen besitzen, vgl. Figuren 16 und 17.

Um einerseits auch im Bereich der Ableitfinger 8 eine ausreichend starke Förderwirkung der Stachelwalze 4 zu haben, andererseits aber für die Übergabe des Ernteguts auf die Abstreifer kein Verheddern des Ernteguts an den Förderzinken 5 zu haben, kann es in Weiterbildung der Erfindung vorteilhaft sein, wenn die Förderzinken 5 des Stachelrotors 4, die im Bereich der Ableitfinger 8 umlaufen, anders ausgebildet sind als Förderzinken 5, die in einem ableitfingerfreien Mittelabschnitt des Aufsammelförderers 2 umlaufen.

Vorzugsweise kann vorgesehen sein, dass die im Bereich der Ableitfinger 8 umlaufenden Förderzinken 5 eine Abkröpfung entgegen ihrer bestimmungsgemäßen Umlaufrichtung besitzen bzw. in Umlaufrichtung betrachtet mit ihren auskragenden Enden nach hinten gebogen sind bzw. weniger steil zur Umlaufrichtung angestellt sind, vgl. Fig. 9, 19 und 21.

Hingegen können im Mittelabschnitt des Aufsammelförderers 2 umlaufende Förderzinken 5 einen im Wesentlichen geraden Zinkenverlauf besitzen können und/oder steiler angestellte, auskragende Zinkenenden besitzen können, die nicht oder weniger stark nach hinten gebogen sind, vgl. Fig. 6 und 9.

Beispielsweise können die im Mittelabschnitt umlaufenden Förderzinken 5 im Wesentlichen radial angestellt sein, zumindest in einem in Fahrtrichtung betrachtet vorne und oben liegenden Sektor der Stachelwalze 4.

Alternativ oder zusätzlich zu einer solchen Abkröpfung, können bei Vorsehen einer gesteuerten Pickup die Förderzinken 5, die im Bereich der Ableitfinger 8 umlaufen, anders gesteuert sein als die weiter innen zur Mitte hin laufenden Förderzinken 5. Beispielsweise können die an den Ableitfingern 8 umlaufenden Förderzinken 5 früher eingefahren werden bzw. zwischen die Abstreifer 6 eintauchen als die weiter in der Mitte laufenden Förderzinken 5. Alternativ oder zusätzlich können die an den Ableitfingern umlaufenden Förderzinken bei Anfahren der Ableitfinger auch entgegen der Umlaufrichtung der Stachelwalze zurückgekippt bzw. -geschwenkt werden, um durch den weiteren Umlaufweg eingezogen zu werden, ohne an den Ableitfingern anzufahren, vgl. Fig. 9.

## Patentansprüche

1. Landwirtschaftliche Erntemaschine wie Ballenpresse oder Ladewagen, mit einem Aufsammelförderer (2) umfassend eine Stachelwalze zum Aufsammeln von Erntegut (9) vom Boden und Übergeben an einen Weiterförderer (3), wobei die Stachelwalze (4) umlaufend antreibbare Förderzinken (5) aufweist, die zwischen Abstreifern (6) angeordnet sind und sich entlang eines Abschnitts ihrer Umlaufbahn zumindest teilweise zwischen die Abstreifer (6) zurückziehen, und wobei an zumindest einem Randabschnitt der Stachelwalze (4) Querleitmittel (7) zum Verjüngen des Erntegutstroms und/oder Zusammenführen des zum Weiterförderer (3) strömenden Ernteguts vorgesehen sind, **dadurch gekennzeichnet, dass** die Querleitmittel (7) gebogene Ableitfinger (8) umfassen, die von jeweils einem Abstreifer (6) auskragend zum Weiterförderer (3) hin vorspringen und mit ihren freien Enden (10) nach innen zu einem Mittelabschnitt (3M) des Weiterförderers (3) hin gebogen sind.

2. Landwirtschaftliche Erntemaschine nach dem vorhergehenden Anspruch, wobei die Ablenkfinger (8) mit ihrer dem Erntegut zugewandten Seite konvex gekrümmt ausgebildet sind.

3. Landwirtschaftliche Erntemaschine nach einem der vorhergehenden Ansprüche, wobei die Ableitfinger (8) mehrachsig gekrümmt ausgebildet sind, wobei die Ableitfinger (8) einerseits eine Krümmung um eine Krümmungsachse parallel zur Umlaufachse der Stachelwalze (4) besitzen und durch diese Krümmung zu den freien Enden (10) hin ansteigen und andererseits eine Krümmung um eine aufrechte Krümmungsachse besitzen und durch diese Krümmung nach innen zum Mittelabschnitt (3M) des Weiterförderers (3) hin abbiegen.

4. Landwirtschaftliche Erntemaschine nach einem der vorhergehenden Ansprüche, wobei die Ableitfinger (8) mit ihrer dem Erntegut zugewandten Seite auf einer harmonisch gekrümmten Hüllfläche angeordnet sind, die ein gebogenes, rinnenförmiges Schaufelblatt bildet, das vom Rand der Stachelwalze (4) von deren Oberseite ausgehend zum Weiterförderer (3) hin vorspringt und sich zum Mittelabschnitt (3M) des Weiterförderers (3) hin krümmt.

5. Landwirtschaftliche Erntemaschine nach einem der vorhergehenden Ansprüche, wobei zwischen benachbarten Ableitfingern (8) jeweils eine Förderzinkenreihe der Förderzinken (5) umläuft und zumindest teilweise an den benachbarten Ableitfingern (8) vorbeistreicht.

6. Landwirtschaftliche Erntemaschine nach dem vorhergehenden Anspruch, wobei die Ableitfinger (8) jeweils eine Umlaufebene, in der zum jeweiligen Ableitfinger (8) benachbarte Förderzinken (5) umlaufen, mit ihren gebogenen Endabschnitten schneiden, wobei zumindest ein Ableitfinger (8) auch zwei oder mehrere Umlaufebenen schneidet, sodass ein Fußabschnitt des Ableitfingers (8), der auf einem Abstreifer (6) sitzt, auf einer Außenseite der geschnittenen Umlaufebene und das freie Ende des Ableitfingers (8) auf einer Innenseite der genannten Umlaufebene positioniert sind.

7. Landwirtschaftliche Erntemaschine nach dem vorhergehenden Anspruch, wobei die in den von den Ableitfingern (8) geschnittenen Umlaufebenen umlaufenden Förderzinken (5) in Umlaufrichtung betrachtet vor den Ableitfingern (8) abtauchen und unter den Ableitfingern (8) hindurchlaufen.

8. Landwirtschaftliche Erntemaschine nach einem der vorhergehenden Ansprüche, wobei benachbarte Ableitfinger (8) jeweils durch einen Schlitz (11) voneinander beabstandet sind, der zu den freien Enden (10) hin offen ausgebildet ist, wobei eine Schlitzbreite zu den freien Enden (10) hin größer wird, insbesondere an den stromaufseitigen Abschnitten der Ableitfinger (8) zunächst konstant ist und dann zu den freien Enden (10) hin kontinuierlich zunimmt.

9. Landwirtschaftliche Erntemaschine nach einem der vorhergehenden Ansprüche, wobei die Ableitfinger (8) elastisch ausgebildet sind derart, dass die Ableitfinger (8) bei im Arbeitsbetrieb bestimmungsgemäß auftretenden Erntegutdrücken mit ihren freien Enden (10) elastisch nachgeben und/oder wegfedern.

10. Landwirtschaftliche Erntemaschine nach einem der vorhergehenden Ansprüche, wobei die Ableitfinger (8) zu ihren freien Enden (10) hin schmaler werden und/oder die Ableitfinger (8) in einem Fußabschnitt, mit dem die Ableitfinger (8) an den Abstreifern (6) befestigt sind, eine Fingerbreite besitzen, die im Wesentlichen der Breite der Abstreifer (6) entspricht, und in ihren auskragenden Endabschnitten eine Fingerbreite besitzen, die weniger als 75% oder weniger als 50%, insbesondere etwa 20% bis 50% der Fingerbreite im Fußabschnitt beträgt.

11. Landwirtschaftliche Erntemaschine nach einem der vorhergehenden Ansprüche, wobei die Ableitfinger (8) unterschiedliche Fingerlängen besitzen, wobei ein näher zur Mitte (2m) des Aufsammelförderers (2) angeordneter Ableitfinger (8) eine kürzere Länge besitzt als ein weiter außen angeordneter Ableitfinger (8), wobei insbesondere die Fingerlängen der Ableitfinger (8) von innen nach außen orgelpfeifenartig zunehmen.

12. Landwirtschaftliche Erntemaschine nach einem der vorhergehenden Ansprüche, wobei die Ableitfinger (8) entlang zumindest einem ihrer Ränder einen zum Erntegut vorspringenden Randsteg (12) aufweisen.

13. Landwirtschaftliche Erntemaschine nach einem der vorhergehenden Ansprüche, wobei zumindest einer der Ableitfinger (8) zwischen zwei Reihen von Förderzinken (5) angeordnet ist, sodass Förderzinken (5) auf beiden Seiten des Ableitfingers (8) vorbeistreifen.

14. Landwirtschaftliche Erntemaschine nach einem der vorhergehenden Ansprüche, wobei die Förderzinken (5), die im Bereich der Ableitfinger (8) umlaufen, im Vergleich zu den Förderzinken (5), die in einem Mittelabschnitt (2M) des Aufsammelförderers umlaufen, abweichend ausgebildet sind und zwar hinsichtlich Zinkenform und/oder Zinkenlänge und/oder Zinkendicke und/oder Steuerung des Abtauchens.

15. Landwirtschaftliche Erntemaschine nach dem vorhergehenden Anspruch, wobei die Förderzinken (5), die im Bereich der Ableitfinger (8) umlaufen, a.) in Umlaufrichtung betrachtet früher zwischen den Abstreifern (6) abtauchen als die Förderzinken (5), die im Mittelabschnitt (2M) des Aufsammelförderers (2) umlaufen und/oder b.) eine Abkröpfung entgegen ihrer bestimmungsgemäßen Umlaufrichtung und/oder entgegen ihrer bestimmungsgemäßen Umlaufrichtung zurückgebogene Endabschnitte besitzen, und die im Mittelabschnitt (2M) des Aufsammelförderers (2) umlaufenden Förderzinken (5) einen im Wesentlichen geraden Zinkenverlauf besitzen.
